# EUROPEAN PATENT APPLICATION

(11) **EP 2 857 924 A2**
(43) Date of publication of application: **08.04.2015**
(21) Application number: 14181558.9
(22) Date of filing: 20.08.2014
(51) Int. Cl.: G06F 1/16, H04N 5/64

(54) **Video display apparatus**

(30) Priority: 03.10.2013 JP 2013208173
(71) Applicant: Kabushiki Kaisha Toshiba, Tokyo 105-8001 (JP); Toshiba Lifestyle Products & Services Corporation, Ome-shi, Tokyo 198-8710 (JP)
(72) Inventor: Morito, Yoshihiro, Tokyo, 105-8001 (JP)
(74) Representative: Henkel, Breuer & Partner

(57) **Abstract**

According to one embodiment, a video display apparatus comprises a housing (21), a display panel (12), a board (31), and a connector (41). The housing (21) comprises an opening (11a). The display panel (12) is in the housing (21) and comprises a display screen (12a) exposed from the opening (11a). The board (31) is located behind the display panel (12) and comprises a plurality of light-emitting portions (32). The connector (41) is configured to supply power to a position between the plurality of light-emitting portions (32).

## Description

Embodiments described herein relate generally to a video display apparatus.

A video display apparatus comprising a housing including an opening, and a display panel exposed from the opening is provided.

A general architecture that implements the various features of the embodiments will now be described with reference to the drawings. The drawings and the associated descriptions are provided to illustrate the embodiments and not to limit the scope of the invention.
FIG. 1 illustrates a video display apparatus according to an embodiment.
FIG. 2 is an exemplary exploded perspective view illustrating a television main body shown in FIG. 1.
FIG. 3 is an exemplary elevation view illustrating LED bars and a chassis shown in FIG. 2.
FIG. 4 is an exemplary perspective view illustrating the LED bar and a connector shown in FIG. 3.
FIG. 5 is an exemplary elevation view illustrating the LED bar and a reflection sheet shown in FIG. 2.
FIG. 6 is an exemplary perspective view illustrating the LED bar and a connector cover according to this embodiment.
FIG. 7 is an exemplary perspective view illustrating the connector cover shown in FIG. 6.
FIG. 8 is an exemplary sectional view illustrating the connector and the connector cover according to this embodiment.
FIG. 9 is an exemplary perspective view illustrating the connector cover and the reflection sheet according to this embodiment.
FIG. 10 is an exemplary back view illustrating the connector cover shown in FIG. 6.
FIG. 11 is an exemplary perspective view illustrating a modification of the LED bar and the connector.

Various embodiments will be described hereinafter with reference to the accompanying drawings.

In general, according to one embodiment, a video display apparatus comprises a housing, a display panel, a board, and a connector. The housing comprises an opening. The display panel is in the housing and comprises a display screen exposed from the opening. The board is located behind the display panel and comprises a plurality of light-emitting portions. The connector is configured to supply power to a position between the plurality of light-emitting portions.

In this specification, some components are expressed by two or more terms. These terms are merely examples. The components may be further expressed by another or other terms. The other components which are not expressed by two or more terms may be expressed by another or other terms.

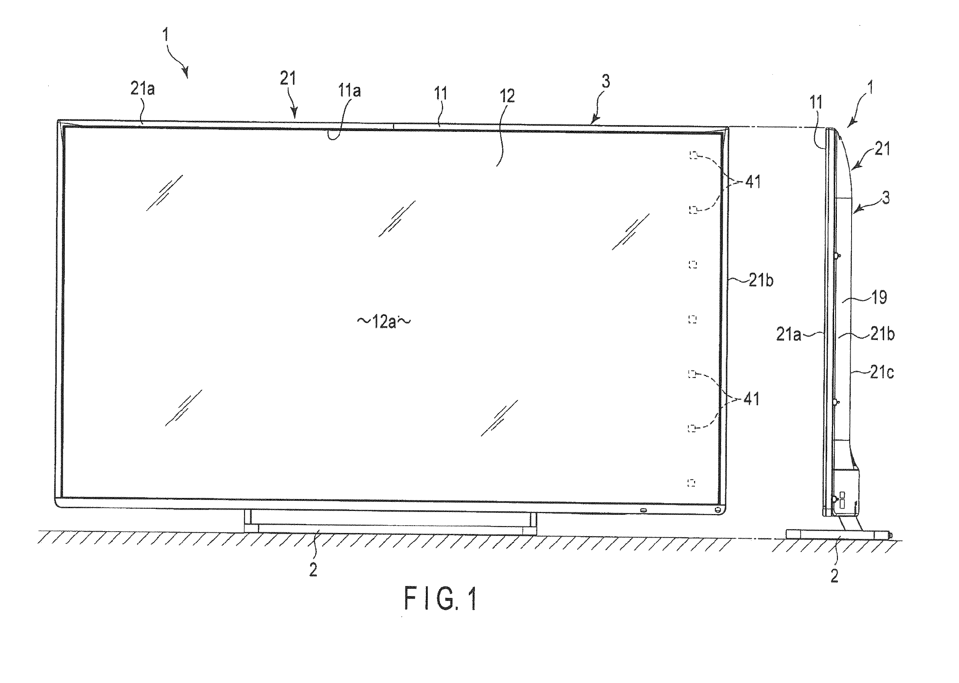

FIGS. 1 to 11 illustrate a television 1 according to an embodiment. The television 1 is an example of each of a video display apparatus and an electronic apparatus. It should be noted that a video display apparatus or an electronic apparatus to which the embodiments can be applied is not limited to a television, and the embodiments can be widely applied to, for example, a monitor, or other various video display apparatuses and electronic apparatuses.

As shown in FIG. 1, the television 1 comprises a stand 2 and a television main body 3. The stand 2 is a pedestal (i.e., supporting portion) configured to be placed on, for example, a television table. The television main body 3 is supported by the stand 2, and stands, for example, on the television table. It should be noted that the television 1 may be a wallmounted television without the stand 2.

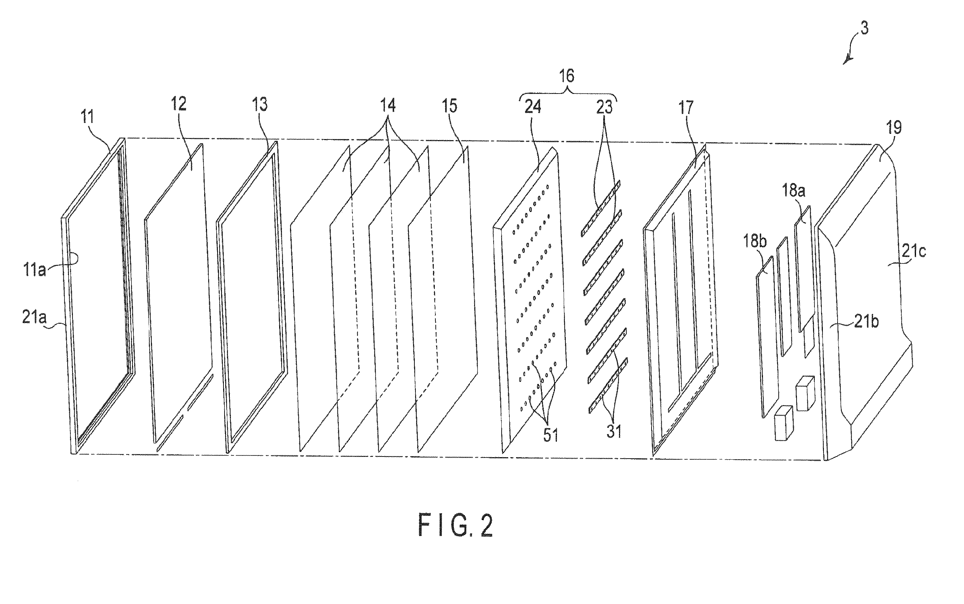

As shown in FIG. 2, the television main body 3 comprises a bezel 11, a liquid crystal panel 12, a midframe 13, a plurality of optical sheets 14, a diffusion plate 15, a backlight unit 16, a chassis 17, a plurality of circuit boards 18a and 18b and a unit cover 19.

In this embodiment, one example of a housing 21 is formed by combination of the bezel 11 and the unit cover 19. The housing 21 is formed in, for example, a flat rectangular box shape. The housing 21 accommodates the liquid crystal panel 12, the midframe 13, the plurality of optical sheets 14, the diffusion plate 15, the backlight unit 16, the chassis 17 and the plurality of circuit boards 18a and 18b. Instead, one example of a housing may be formed by combination of the bezel 11, the midframe 13 and the chassis 17.

The bezel 11 (i.e., front cover) is formed of, for example, synthetic resin. The bezel 11 forms a frame around the whole peripheral edge of the liquid crystal panel 12. A relatively-large opening 11a exposing the liquid crystal panel 12 is provided in the bezel 11. The bezel 11 forms, for example, a front wall 21a and part of a peripheral wall 21b of the housing 21 and is exposed to the outside of the television 1.

The liquid crystal panel 12 (i.e., liquid crystal cell) is an example of a display panel. The liquid crystal panel 12 includes two glass substrates, a liquid crystal layer sandwiched between the two glass substrates, and polarizing plates (i.e., polarizing filters). A liquid crystal bezel (not shown) for preventing a glass substrate, a liquid crystal layer, a polarizing plate, etc., from being scattered as in a conventional liquid crystal panel is not present in the embodiment. The liquid crystal panel 12 comprises a display screen 12a (i.e., image forming area) exposed from the opening 11a of the housing 21. It should be noted that the display screen of this embodiment is an area located inside the opening 11a. The liquid crystal panel 12 receives light from the backlight unit 16 and displays images or video on the display screen 12a.

The midframe 13 is formed of, for example, synthetic resin. Alternatively, the midframe 13 may be formed of metallic material. The midframe 13 is formed in a frame shape along the whole peripheral edge of the liquid crystal panel 12. A peripheral end of the liquid crystal panel 12 is sandwiched and held between the inner surface of the bezel 11 and the midframe 13.

The plurality of optical sheets 14 comprises, for example, two prism sheets and a polarizing sheet. The plurality of optical sheets 14 and the diffusion plate 15 are provided behind the liquid crystal panel 12. That is, the plurality of optical sheets 14 and the diffusion plate 15 are located between the liquid crystal panel 12 and the backlight unit 16.

The backlight unit 16 is located between the liquid crystal panel 12 and the chassis 17. The backlight unit 16 emits light toward the liquid crystal panel 12. The structure of the backlight unit 16 will be described later in detail.

The chassis 17 (i.e., back bezel or first back cover) is formed of, for example, metal. Alternatively, the chassis 17 may be formed of synthetic resin. The chassis 17 is an example of a metal member, a holding member and a reinforcement member. The chassis 17 is formed, for example, in a bowl shape with its front surface recessed. The chassis 17 is located behind the backlight unit 16, and covers an entire area of a back surface of the backlight unit 16. The chassis 17 is combined with the bezel 11 and the midframe 13 and fixed. Strength (i.e., rigidity) of the housing 21 is increased by providing the chassis 17.

The plurality of circuit boards 18a and 18b are located behind the chassis 17. That is, the plurality of circuit boards 18a and 18b are located between the chassis 17 and the unit cover 19. The plurality of circuit boards 18a and 18b comprise the control board 18a (i.e., drive board) configured to control the liquid crystal panel 12 and the power board 18b (i.e., power circuit board) configured to supply power to the backlight unit 16. It should be noted that the power board 18b may combine the function of the control board, i.e., the function of controlling emission of light of, for example, the backlight unit 16.

The unit cover 19 (i.e., second back cover) is formed of, for example, synthetic resin. Alternatively, the unit cover 19 may be formed of metallic material. The unit cover 19 is formed in a bowl shape with its front surface recessed behind the chassis 17 and covers the plurality of circuit boards 18a and 18b from the back. The unit cover 19 is combined with at least one of the bezel 11, the midframe 13 and the chassis 17 and fixed. The unit cover 19 forms, for example, a back wall 21c and part of the peripheral wall 21b of the housing 21.

Next, the backlight unit 16 of this embodiment will be described in detail.

As shown in FIG. 2, the backlight unit 16 comprises a plurality of (e.g., seven to nine) LED bars 23 and a reflection sheet 24.

The LED bar 23 is an example of a light-emitting module. The LED bar 23 comprises an elongated board 31 (i.e., wiring board or printed wiring board) and a plurality of LEDs 32 (i.e., LED components or light-emitting components) attached to the board 31. The board 31 comprises wiring patterns 33 electrically connected to the plurality of LEDs 32. It should be noted that the wiring patterns 33 are covered with an insulating layer and protected. A surface of the board 31 is painted, for example, white to have high light reflectivity.

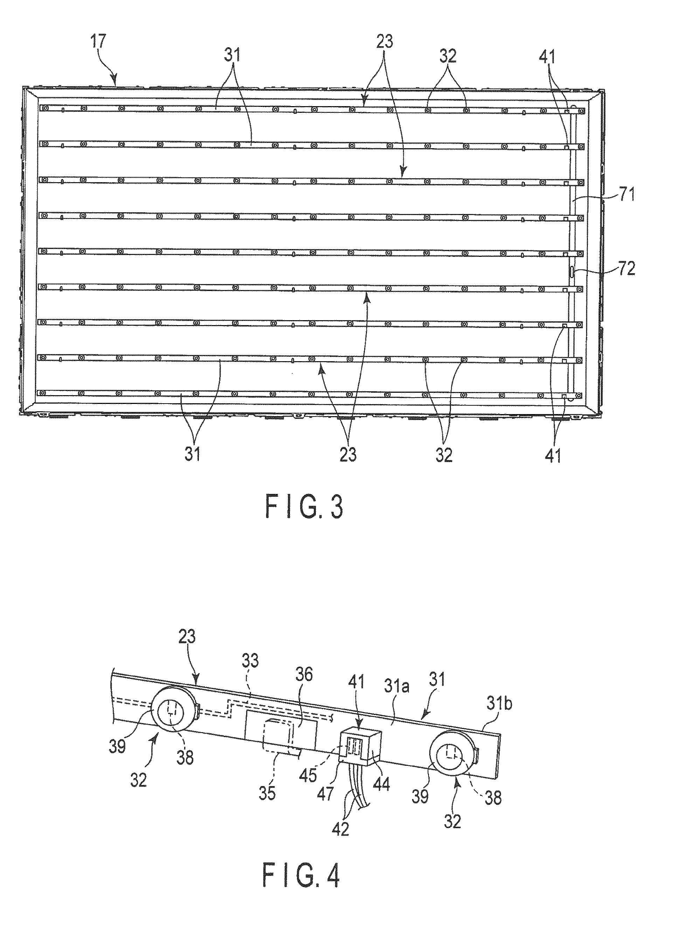

As shown in FIGS. 2 and 3, the LED bars 23 (i.e., boards 31) extend in a substantially horizontal direction over substantially the whole width of the display screen 12a. The plurality of LED bars 23 are arranged substantially parallel to each other by placing clearance in a substantially vertical direction. It should be noted that the plurality of LED bars 23 may be stood and arranged in the substantially vertical direction.

As shown in FIG. 4, the board 31 comprises the first surface 31a and a second surface 31b located on the opposite side to the first surface 31a. The first surface 31a faces the liquid crystal panel 12. The plurality of LEDs 32 are attached to the first surface 31a. On the other hand, the second surface 31b faces the chassis 17.

As shown in FIG. 4, the chassis 17 comprises supporting portions 35 each supporting the board 31. The supporting portion 35 is, for example, an engaging portion (i.e., catch portion or lug portion) engaged with the first surface 31a of the board 31. The supporting portion 35 is formed by, for example, forming an inverse-U-shaped cut-out in the chassis 17, and pushing out the whole of the inside of the cut-out forward (i.e., on the side of the liquid crystal panel 12) with the lower portion of the notch connected to the chassis 17.

As shown in FIG. 4, the board 31 comprises a receiving portion 36 with which the supporting portion 35 of the chassis 17 is engaged (i.e., which the supporting portion 35 of the chassis 17 contacts). The receiving portion 36 is an example of a non-conductor portion and a non-conductor pattern portion. The receiving portion 36 is an area in which the wiring pattern 33 makes a detour to avoid conduction of the metallic supporting portion 35 (i.e., an area in which the wiring pattern 33 is not present). The board 31 is inserted between the supporting portion 35 and a front surface of the chassis 17 and supported by the supporting portion 35 and the front surface of the chassis 17. The supporting portion 35 and the receiving portion 36 are provided in a plurality of portions along a longitudinal direction of the board 31.

The LED 32 is an example of a light-emitting portion. The plurality of LEDs 32 are arranged in the longitudinal direction of the board 31 at predetermined intervals. The LED 32 comprises a light-emitting element 38 (i.e., LED element) and a lens 39 covering the light-emitting element 38. The lens 39 is formed, for example, in a flat hemispherical shape.

Next, a connector 41 provided on the LED bar 23 will be described in detail.

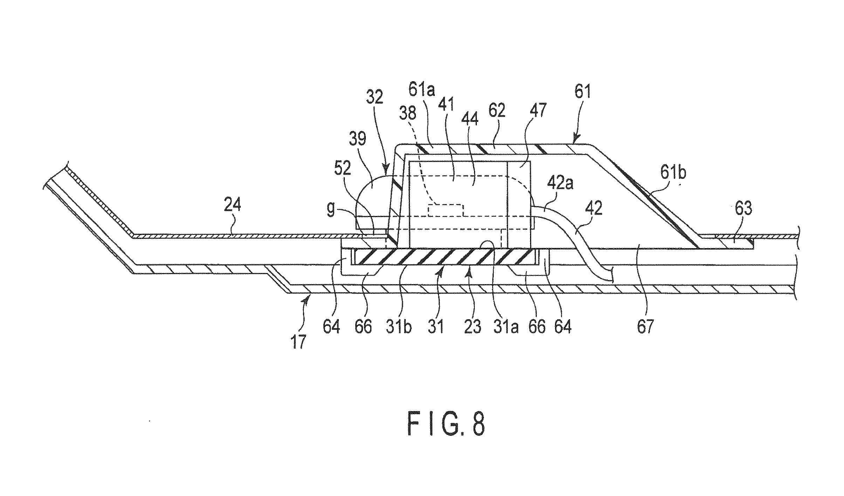

As shown in FIGS. 3 and 4, the connector 41 is attached to a first surface 31a of the board 31 beside the plurality of LEDs 32. A cable 42 electrically connected to a power board 18b is connected to the connector 41, and the connector 41 supplies power to the board 31. The upper surface of the connector 41 is located in an upper position than, for example, the LED 32 with respect to the first surface 31a of the board 31 (see FIG. 8). The upper surface of the connector 41 is located in an upper position than, for example, the light-emitting element 38 of the LED 32 with respect to the first surface 31a of the board 31. It should be noted that in this embodiment, the upper surface of the connector 41 is located in an upper position than, for example, the lens 39 of the LED 32 with respect to the first surface 31a of the board 31.

As shown in FIG. 4, the connector 41 is, for example, a female type, and comprises a case 44 having an insertion port and a connecting terminal 45 provided in the case 44. On the other hand, a male connector 47 configured to be inserted into the connector 41 is attached to an end of the cable 42. The connector 41 and the connector 47 are connected, and then the board 31 is electrically connected to the power board 18b through the cable 42.

The number of the cables 42 connected to the connector 41 is, for example, two. It should be noted that three or more cables 42 (e.g., the number of the cables 42 can be more than ten) are connected to the connector 41, for example, in a model requiring advanced control such as control of partially lighting up the backlight unit 16. Thus, the connector 41 is easy to be comparatively large.

The connector 41 is attached to the board 31 between the plurality of LEDs 32. The connector 41 is located, for example, between two LEDs 32 adjacent to each other. In this embodiment, the connector 41 is located between two LEDs 32 closest to an end of the board 31. It should be noted that the location of the connector 41 is not limited to the above portion, and the connector 41 may be located between two LEDs 32 in a central area or another area of the board 31. Also, in this embodiment, the connector 41 is located between the receiving portion 36 (i.e., non-conductor pattern portion) and the LED 32.

This makes the connector 41 of this embodiment being located behind the display screen 12a (i.e., image forming area) (see FIG. 1). That is, the connector 41 is located in an interior area of the opening 11a of the housing 21. It should be noted that the interior area of the opening indicates an area overlapping the display screen 12a located inside the opening 11a when the television 1 is viewed from the front.

As shown in FIG. 2, the reflection sheet 24 is located between the liquid crystal panel 12 and the board 31 of the LED bar 23. That is, the reflection sheet 24 is located in front of the board 31. The reflection sheet 24 has, for example, a white reflecting surface and high light reflectivity.

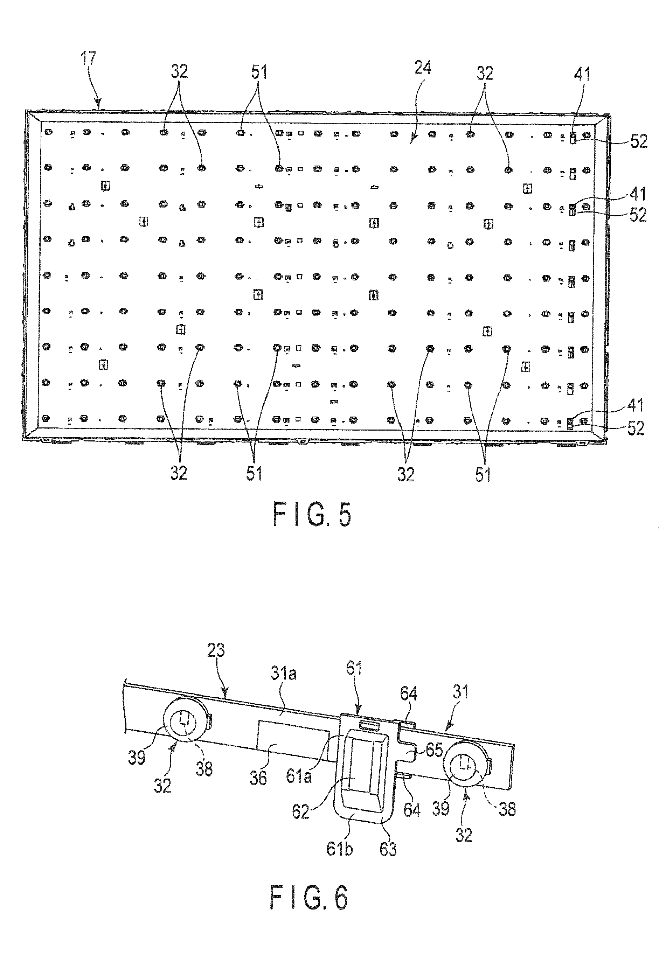

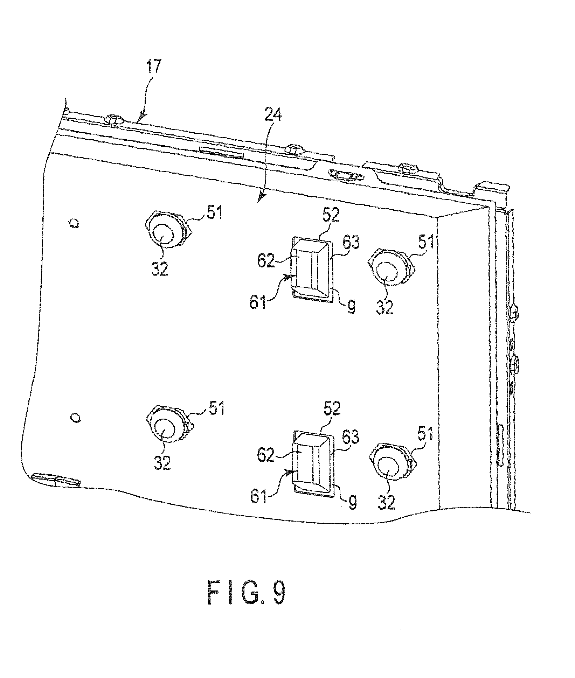

As shown in FIGS. 2 and 5, the reflection sheet 24 comprises a plurality of first holes 51 through which the plurality of LEDs 32 are individually passed, and second holes 52 through which the connector 41 is passed. The LED 32 is passed through the first hole 51, and projects to the front of the reflection sheet 24 (see, e.g., FIG. 9). The reflection sheet 24 reflects part of the light from the LED 32 toward the liquid crystal panel 12.

A slight gap is provided between the lens 39 of the LED 32 and the first surface 31a of the board 31. An inner edge of the first hole 51 of the reflection sheet 24 is inserted into the gap, and engaged between the lens 39 of the LED 32 and the first surface 31a of the board 31. This allows the reflection sheet 24 to be hard to turn up.

On the other hand, the connector 41 is passed through the second hole 52, and projects to the front of the reflection sheet 24. This allows the reflection sheet 24 to be kept flat, even when the connector 41 having comparatively greater height is mounted on the board 31. Then, good reflectivity can be expected.

Next, a connector cover 61 will be described in detail.

As shown in FIG. 6, the backlight unit 16 according to this embodiment comprises the connector cover 61 covering the connector 41. The connector cover 61 is, e.g., white, and has light reflectivity. A reflectance (i.e., light reflectance) of the connector cover 61 is substantially the same as, for example, that of the reflection sheet 24. The reflectance of the connector cover 61 is higher than that of the connector 41.

In other words, a surface of the connector cover 61 is formed to be similar to the reflection sheet 24 in light reflectance. Such a surface of the connector cover 61 may be formed by selecting a material for forming the connector cover 61, or by painting the surface of the connector cover 61 in a predetermined manner after the connector cover 61 is formed.

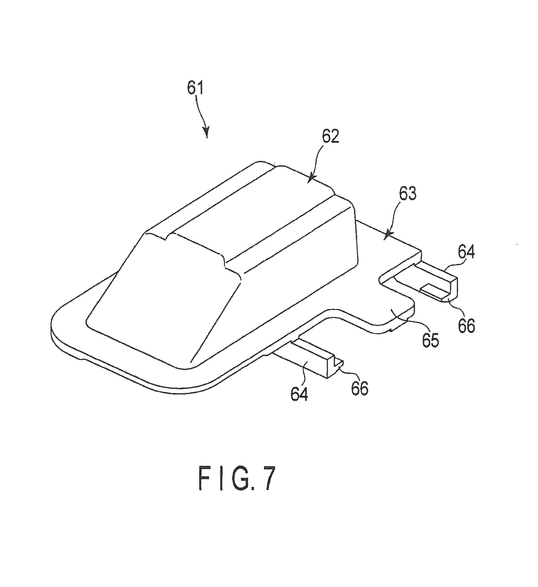

The connector cover 61 is formed of, for example, synthetic resin. It has predetermined solidity, and its shape is not transformed. The connector cover 61 is detachably attached to the board 31, for example, with a single motion. As shown in FIG. 7, the connector cover 61 comprises a cover portion 62 (i.e., first portion) and a base portion 63 (i.e., second portion). The cover portion 62 is passed through the second hole 52 of the reflection sheet 24, and located in front of the reflection sheet 24. The cover portion 62 is formed in a bowl shape, and covers the connector 41 from five directions, i.e., from the top, bottom, right, left and front.

The base portion 63 is a flange provided along the whole periphery of a base end of the cover portion 62. The base portion 63 is formed in a flat plate shape along the board 31. As shown in FIG. 8, the base portion 63 is located between the reflection sheet 24 and the board 31. The base portion 63 extends more widely than a diameter (i.e., maximum diameter) of the second hole 52 along the first surface 31a of the board 31, and faces a back surface of the reflection sheet 24. This allows the base portion 63 to cover a gap g between the cover portion 62 and an inner peripheral edge of the second hole 52 from the side opposite to the liquid crystal panel 12, as shown in FIGS. 8 and 9.

As shown in FIGS. 7, 8 and 10, the base portion 63 comprises a pair of holding portions 64 (i.e., side face guides) and a support portion 65 (e.g., pressing portion). The pair of holding portions 64 are separately located on the both sides in a width direction of the board 31, and the board 31 is sandwiched between them. This prevents the connector cover 61 from tilting relative to the board 31. Then, the position of the connector cover 61 can be stabilized relative to the board 31.

The support portion 65 is formed in a flat plate shape, located between the pair of holding portions 64, and faces (i.e., contacts) the first surface 31a of the board 31. On the other hand, an engaging portion 66 (i.e., lug portion) is provided at the top of each holding portion 64. The engaging portion 66 is engaged with the second surface 31b of the board 31. More particularly, the engaging portion 66 of the pair of holding portions 64 is engaged with the second surface 31b of the board 31 at both ends in a width direction of the board 31. This allows the board 31 to be sandwiched and held between the support portion 65 and the engaging portion 66, and allows the connector cover 61 not to be removed from the board 31.

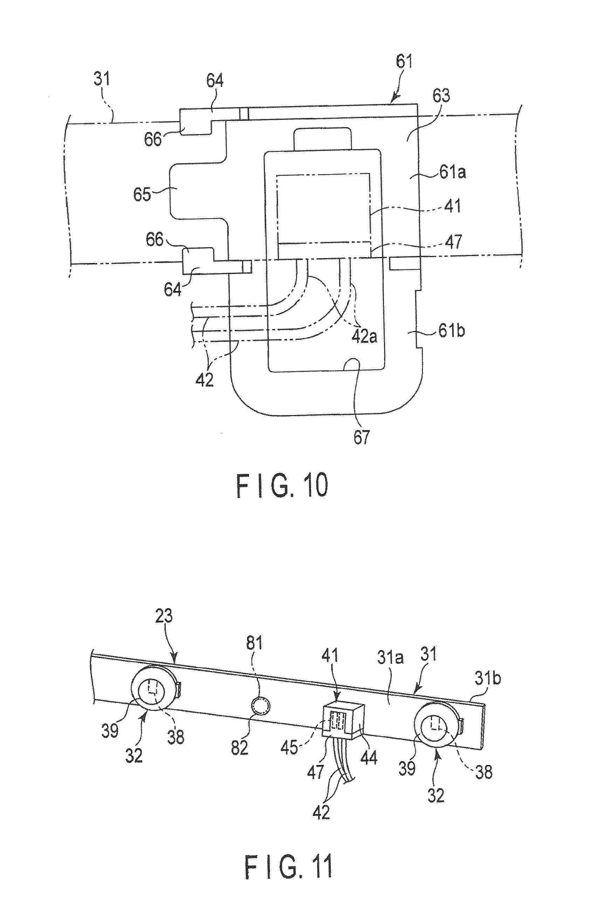

As shown in FIGS. 8 and 10, the cable 42 comprises an end 42a connected to the connector 47. The connector cover 61 covers the end 42a of the cable 42 as well as the connector 41. That is, the connector cover 61 covers a connecting portion between the connector 47 and the cable 42.

As shown in FIGS. 6, 8 and 10, the connector cover 61 extends in a direction intersecting with (e.g., in a direction substantially orthogonal to) a longitudinal direction of the board 31. The connector cover 61 is greater than the board 31 in width. That is, the connector cover 61 comprises a first portion 61a facing the board 31 and a second portion 61b which is out of the board 31.

The connector cover 61 comprises an opening 67 for exposing storage space inside the cover portion 62 to the outside. That is, the connector 47 and the end 42a of the cable 42 are passed through the opening 67 and contained in the cover portion 62. The opening 67 is opened on a back surface of the connector cover 61, and faces the board 31. The opening 67 is provided over the first portion 61a and the second portion 61b of the connector cover 61. That is, part of the opening 67 is opened toward a direction opposite to the liquid crystal panel 12 at a position off the board 31.

As shown in FIGS. 8 and 10, the cable 42 is taken out of the connector cover 61 from the opening 67 in the second portion 61b of the connector cover 61. As shown in FIG. 3, a groove 71 through which the cable 42 is passed (i.e., in which the cable 42 is stored) is provided in the chassis 17. The groove 71 is a recess extending in a substantially vertical direction in the chassis 17. The groove 71 extends, for example, over the plurality of LED bars 23. Also, at least one hole 72 passing the chassis 17 is provided in the groove 71.

The cable 42 extending from the connector 41 of each of the LED bars 23 extends toward the hole 72 along the groove 71, and goes out behind the chassis 17 through the hole 72. The cable 42 is connected to the power board 18b behind the chassis 17.

According to such a structure, a frame of the television 1 can be narrowed.

Recently, a narrowed frame of a bezel forming an opening is desired to realize upsizing of a display screen of a video display apparatus. However, a connector for power supply attached to, for example, an LED bar is hard to cover with a reflection sheet, since a cable is connected and then the height of the connector becomes great. Thus, the connector for power supply is generally located behind the bezel without being covered with the reflection sheet, and the frame of the bezel is hard to narrow.

On the other hand, video display apparatus according to this embodiment (e.g., television 1) comprises the housing 21, a display panel (e.g., liquid crystal panel 12), the board 31, and the connector 41. The housing 21 comprises the opening 11a. The display panel is in the housing 21 and comprises the display screen 12a exposed from the opening 11a. The board 31 is located behind the display panel and comprises a plurality of light-emitting portions (e.g., LEDs 32). The connector 41 is configured to supply power to a position between the plurality of light-emitting portions.

According to such a structure, a frame of the bezel 11 can be narrowed regardless of a position and a size of the connector 41 for power supply. This allows the frame of the television 1 to be narrowed.

The connector 41 for power supply has a lower reflectance (i.e., light reflectance) than the reflection sheet 24. Thus, if the connector 41 is located behind the display screen 12a, a dark portion (i.e., luminance unevenness) may occur in a portion corresponding to the connector 41 of the display screen 12a. The phenomenon may occur especially in a thintype video display apparatus having a short distance between the LED 32 and the diffusion plate 15.

For example, a reflection sheet can be stuck to cover the connector 41. In that case, however, workability of attaching the sheet having flexibility is not good, and the sheet may be come off in time. Thus, an improvement should be made in terms of long-term reliability. Also, the connector can be arranged behind the chassis. In that case, however, a layout of other components (e.g., circuit board) to be provided behind the chassis will be limited.

Then, in this embodiment, the backlight unit 16 comprises the connector cover 61 having light reflectivity covering the connector 41. According to such a structure, a reflectance can be improved even in a portion corresponding to the connector 41, and a dark portion is suppressed from occurring on the display screen 12a. This allows image quality of the television 1 to be improved. Also, according to this embodiment, since the connector 41 does not form a projecting portion behind the chassis 17, the layout of other components (e.g., circuit board) to be provided behind the chassis 17 is hard to limit.

In this embodiment, the connector cover 61 is formed of synthetic resin, and detachably attached to the board 31 of the LED bar 23. According to such a structure, the connector 41 can be surely and easily covered in comparison with the connector 41 covered with, for example, a member such as a sheet.

In this embodiment, the board 31 comprises the first surface 31a to which the plurality of light-emitting portions are attached, and the second surface 31b located opposite to the first surface 31a. The connector cover 61 comprises the engaging portion 66 engaged with the second surface 31b of the board 31.

According to such a structure, the connector cover 61 is mechanically fixed to the board 31. Thus, the connector cover 61 of this embodiment varies across the ages less than the case where, for example, an adhesive or a double-sided tape is used, and long-term reliability is easier to achieve. Also, since the connector cover 61 of this embodiment is attachable to any part of the board 31, a change of a screen size of the liquid crystal panel 12 can be flexibly coped with.

In this embodiment, the connector cover 61 comprises a first portion (e.g., cover portion 62) passed through the hole 52 of the reflection sheet 24 and covering the connector 41, and a second portion (e.g., base portion 63) extending along the first surface 31a of the board 31 and covering the gap g between the first portion and the inner peripheral edge of the hole 52 from the opposite side to the display panel. According to such a structure, since the gap g between the cover portion 62 and the inner peripheral edge of the hole 52 can be covered with a material having a high reflectance, a dark portion can be further suppressed from occurring on the display screen 12a. This allows the image quality of the television 1 to be further enhanced.

In this embodiment, the connector cover 61 covers the end 42a of the cable 42. According to such a structure, the dark portion can be suppressed from occurring on the display screen 12a even in a portion corresponding to the end 42a of the cable 42. This allows image quality of the television 1 to be further enhanced.

In this embodiment, the width of the connector cover 61 is greater than that of the board 31. The connector cover 61 comprises the opening 67 which is opened on the opposite side to the display panel at a position off the board 31 and which the cable 42 is passed through. According to such a structure, the cable 42 can be taken out to a necessary place with the cable 42 covered with the connector cover 61. This further suppresses the dark portion from occurring on the display screen 12a in the portion corresponding to the cable 42.

In this embodiment, the reflectance of the connector cover 61 is higher than that of the connector 41. According to such a structure, the dark portion can be further suppressed from occurring on the display screen 12a. This allows the image quality of the television 1 to be further enhanced.

In this embodiment, the television 1 further comprises a metal member (e.g., chassis 17) located behind the light-emitting modules. The metal member comprises the supporting portion 35 configured to support the board 31. The board 31 comprises a non-conductor pattern portion (e.g., receiving portion 36) with which the supporting portion 35 is engaged. The connector 41 is located between one of the plurality of light-emitting portions and the non-conductor pattern portion. According to such a structure, a space area of the LED bar 23 is effectively used, and the connector 41 can be located behind the display screen 12a.

Next, a modification of this embodiment will be described.

As shown in FIG. 11, the chassis 17 comprises a projection 81 for positioning (i.e., first engaging portion) projected toward the board 31. The chassis 17 is an example of a holding member. The board 31 comprises a positioning hole 82 (i.e., second engaging portion) through which the projection 81 is passed. The projection 81 is inserted into the positioning hole 82, and the board 31 is positioned. In this modification, the connector 41 is located between one of the LEDs 32 and the positioning hole 82. It should be noted that the projection 81 may be provided on the board 31, and the positioning hole 82 may be provided on the chassis 17, instead of the above structure.

According to such a structure, a space area of the LED bar 23 is effectively used, and the connector 41 can be located behind the display screen 12a.

For example, the shape of the connector cover 61 is not limited to the above shape. Various shapes can be properly adopted. The connector cover 61 may be constituted of only the cover portion 62 without the base portion 63. The connector cover 61 may be fixed to the board 31 by a fixing member such as a screw, a double-sided tape or an adhesive. The connector cover 61 is not necessarily formed of synthetic resin.

## Claims

1. A video display apparatus **characterized by** comprising;
a housing (21) comprising an opening (11a);
a display panel (12) in the housing (21), the display panel (12) comprising a display screen (12a) exposed from the opening (11a);
a board (31) located behind the display panel (12) and comprising a plurality of light-emitting portions (32); and
a connector (41) configured to supply power to a position between the plurality of light-emitting portions (32).

2. The video display apparatus of Claim 1, **characterized in that** the connector (41) is attached to the board (31) at the position between the plurality of light-emitting portions (32).

3. The video display apparatus of Claim 1 or 2, **characterized by** further comprising a connector cover (61) comprising light reflectivity and covering the connector (41).

4. The video display apparatus of Claim 3, **characterized in that** the connector cover (61) is formed of synthetic resin and detachably attached to the board (31).

5. The video display apparatus of Claim 4, **characterized in that** the board (31) comprises a first surface (31a) to which the plurality of light-emitting portions (32) are attached, and a second surface (31b) opposite to the first surface (31a), and
the connector cover (61) comprises an engaging portion (66) configured to engage with the second surface (31b) of the board (31).

6. The video display apparatus of Claim 5, **characterized by** further comprising a reflection sheet (24) between the display panel (12) and the board (31), the reflection sheet (24) comprising a plurality of holes (51, 52) through which the plurality of lightemitting portions (32) and the connector (41) are passed.

7. The video display apparatus of Claim 6, **characterized in that** the connector cover (61) comprises a first portion (61a) passed through one of the holes (52) and covering the connector (41), and a second portion (61b) extending along the first surface (31a) of the board (31) and covering a gap (g) between the first portion (61a) and an inner edge of the hole (52) from an opposite side to the display panel (12).

8. The video display apparatus of any of Claims 3 to 7, **characterized by** further comprising a cable (42) electrically connected to the connector (41), wherein the connector cover (61) covers an end (42a) of the cable (42).

9. The video display apparatus of Claim 8, **characterized in that** the connector cover (61) comprises an opening (67) which is greater than the board (31) in width and opened in an opposite direction to the display panel (12) at a position off the board (31), and through which the cable (42) is passed.

10. The video display apparatus of any of Claims 3 to 9, **characterized in that** a reflectance of the connector cover (61) is higher than a reflectance of the connector (41).

11. The video display apparatus of any of Claims 1 to 10, **characterized by** further comprising a metal member (17) located behind the board (31),
wherein the metal member (17) comprises a supporting portion (35) configured to support the board (31),
the board (31) comprises a non-conductor pattern portion (36) with which the supporting portion (35) is engaged, and
the connector (41) is located between one of the plurality of light-emitting portions (32) and the non-conductor pattern portion (36).

12. The video display apparatus of any of Claims 1 to 10, **characterized by** further comprising a holding member (17) located behind the board (31),
wherein the holding member (17) comprises a projection (81) projecting toward the board (31),
the board (31) comprises a positioning hole (82) through which the projection (81) is passed, and
the connector (41) is located between one of the plurality of light-emitting portions (32) and the positioning hole (82).
